(19) Europäisches Patentamt
European Patent Office
Office européen des brevets

(11) **EP 4 640 912 A1**

(12) **EUROPEAN PATENT APPLICATION**
published in accordance with Art. 153(4) EPC

(43) Date of publication:
**29.10.2025 Bulletin 2025/44**

(21) Application number: **23907631.8**

(22) Date of filing: **15.12.2023**

(51) International Patent Classification (IPC):
*C23C 2/12* (2006.01)          *C23C 2/28* (2006.01)
*C23C 2/40* (2006.01)          *C22C 21/10* (2006.01)
*C22C 38/02* (2006.01)          *C22C 38/06* (2006.01)
*C21D 8/02* (2006.01)

(52) Cooperative Patent Classification (CPC):
**C21D 8/02; C22C 21/10; C22C 38/02; C22C 38/06;
C23C 2/12; C23C 2/28; C23C 2/40**

(86) International application number:
**PCT/KR2023/020815**

(87) International publication number:
**WO 2024/136346 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2022 KR 20220180969**

(71) Applicant: POSCO Co., Ltd
**Pohang-si, Gyeongsangbuk-do 37859 (KR)**

(72) Inventors:
• **HWANG, Hyeon-Seok
Gwangyang-si, Jeollanam-do 57807 (KR)**

• **LEE, Kang-Min
Gwangyang-si, Jeollanam-do 57807 (KR)**
• **OH, Kkoch-Nim
Gwangyang-si, Jeollanam-do 57807 (KR)**
• **OH, Ji-Eun
Gwangyang-si, Jeollanam-do 57807 (KR)**
• **CHO, Yong-Kyun
Seoul 06194 (KR)**

(74) Representative: **Meissner Bolte Partnerschaft
mbB
Patentanwälte Rechtsanwälte
Postfach 86 06 24
81633 München (DE)**

(54) **HOT-FORMED PART AND METHOD FOR MANUFACTURING SAME**

(57)     The present invention relates to a hot-formed part used for automobile parts and the like and relates to a hot-formed part manufactured by hot-forming an aluminized steel material and a method for manufacturing same.

[FIG.2]

EP 4 640 912 A1

**Description**

Technical Field

The present disclosure relates to a hot-formed part used for automobile parts, or the like, and more particularly, to a hot-formed part manufactured by hot-forming an aluminum-plated steel material and a method for manufacturing the same.

Background Art

Recently, the use of high-strength steel has increased to reduce a weight of automobile. However, high-strength steel has the problem in that it may be difficult to form a product having a complex and precise shape because a material may break during processing or spring back occurs after processing. To solve this problem, a method referred to as hot-forming or hot press forming (HPF) has been widely used.

In the hot-forming, forming may be easily performed by heating the steel material to 800-900°C and performing processing (press processing) in the heated state, and may be rapid-cooled through a mold, thereby increasing strength of the formed product, which may be advantageous. However, when the steel material is heated to a high temperature, surface oxidation of the steel material surface may not be avoided. This may require an additional process of removing the oxide on the steel material surface after press forming, which increases costs. To prevent this, as a material for hot-forming, an aluminum plating layer (cited documents 1 and 2), a zinc plating layer (cited document 3), or a plating steel material (cited document 4) which is a mixture of the above-mentioned layers may be used on the surface of the steel material.

However, during the heating process for hot-forming, the plating layer having a low melting point may turn into a liquid, and when the liquid is in contact with the atmosphere, moisture ($H_2O$) contained in the atmosphere may dissociate into oxygen ($O_2$) and hydrogen (H), such that oxygen may remain as an oxide on the surface and hydrogen may be solid solute and accumulated in the plating layer. In this state, rapid-cooling may be performed after forming processing, and a large amount of hydrogen may remain in the plating layer having become a solid phase. However, solid-solution of hydrogen in the plating layer may be lower than that in the liquid phase, such that hydrogen may diffuse around the plating layer, some of hydrogen may enter the steel material, and hydrogen entering the steel material may gather in the bonds, which may cause hydrogen delayed fracture, and accordingly, hydrogen embrittlement may occur.

Accordingly, a method to solve the hydrogen embrittlement problem may be necessary.

(Cited document 1) U.S. Registered Patent Publication No. 6,296,805
(Cited document 2) Japanese Registered Patent Publication No. 3845271
(Cited document 3) Japanese Laid-Open Patent Publication No. 2003-147499
(Cited document 4) Japanese Laid-Open Patent Publication No. 2006-051543

Detailed description of present disclosure

Technical problems to solve

An aspect of the present disclosure is to provide a hot-formed part having excellent hydrogen embrittlement resistance and a method for manufacturing the same.

The purpose of the present invention is not limited to the above-described features. The subject matter of the present disclosure may be understood from the entire description in this specification, and a person having ordinary knowledge in the technical field to which the present disclosure belongs may have no difficulty in understanding the additional subject matter of the present disclosure.

Solution to Problem

An aspect of the present disclosure provides a hot-formed part comprising base iron and an aluminum alloy layer formed on the base iron,

wherein the aluminum alloy layer comprises a diffusion layer (a), a first alloy layer (b), a second alloy layer (c), and a third alloy layer (d) sequentially formed from the base iron based on a cross-section,
wherein a thickness (t1) of the first alloy layer (b) is 8.5 $\mu$m or less, and
wherein a thickness (t1) is an average of values measured at 45 points or more at equal intervals of 10 $\mu$m in a horizontal direction from three images obtained using an optical microscope at 500x magnification.

The first alloy layer (b) may comprise Al: 37-52 weight%, Fe: 38-51 weight%, Si: 1.5-5 weight% and Zn: 2-20 weight%, the second alloy layer (c) may comprise Al: 19-47 weight%, Fe: 45-69 weight% and Si: 7.2-15 weight%, and the third alloy layer (d) may comprise Al: 35-52 weight%, Fe: 38-51 weight%, Si: 1.5-5.5 weight% and Zn 5-26 weight%.

A total thickness of the first alloy layer (b), the second alloy layer (c) and the third alloy layer (d) may be 30 μm or less.

The thickness (t1) of the first alloy layer (b) may be smaller than a thickness (t2) of the third alloy layer.

The second alloy layer (c) may comprise a discontinuous region in a length direction of the cross-section.

A Zn content of the first alloy layer (b) may be less than a Zn content of the third alloy layer (d).

A Si content of the second alloy layer (c) may be twice or more than a Si content of the first alloy layer (b) or the third alloy layer (d).

The number of voids having a major axis of 500 nm or more, included in the first alloy layer (b), may be less than the number of voids having a major axis of 500 nm or more, included in the third alloy layer (d).

A major axis of void having a major axis of 500 nm or more, included in the first alloy layer (b), may be smaller than a major axis of void having a major axis of 500 nm or more, included in the third alloy layer (d).

Mg oxide formed on the third alloy layer (d) may be further comprised.

A Si concentrated layer in which a composition of Si is 1.5 times or more concentrated than an average of the diffusion layer (a) may be further comprised on the diffusion layer (a).

The amount of diffusible hydrogen in the base iron may be 0.1 weight ppm or less.

The base iron may comprise, by weight%, C: 0.02 to 0.6%, Si: 0.001 to 2%, Al: 0.001 to 1%, Mn: 0.1 to 4%, P: 0.05% or less, S: 0.02% or less, N: 0.02% or less, Ti: 0 to 0.1%, B: 0.0001 to 0.01%, Cu: 0 to 1.00%, Mo: 0 to 1.00%, Cr: 0 to 1.00%, Ni: 0 to 1.00%, V: 0 to 1.00%, Ca: 0 to 0.01%, Nb: 0 to 0.1%, Sn: 0 to 1%, W: 0 to 1%, Sb: 0 to 1%, Mg: 0 to 0.1%, Co: 0 to 1%, As: 0 to 1%, Zr: 0 to 1%, Bi: 0 to 1%, REM: 0 to 0.3%, and a balance of Fe and inevitable impurities.

An aspect of the present disclosure provides a method for manufacturing the hot-formed part comprising providing an aluminum-plated steel sheet including a base steel sheet and an aluminum plating layer formed on a surface of the base steel sheet;

> manufacturing a blank using the aluminum-plated steel sheet, and heating the blank; and
> forming and cooling the heated blank,
> wherein the providing the aluminum-plated steel sheet comprises:
>
> forming the aluminum plating layer by immersing the base steel sheet in a plating bath including 10-35 weight% of Zn, 15 weight% or less of Si, and a remainder Al and inevitable impurities;
> cooling the aluminum plating layer to a solidification point at an average rate of 20°C/s or more; and
> cooling from the solidification point to 350°C at an average rate of less than 20°C/s.

The plating bath may comprise 4 weight% or less of Fe.

The plating bath may comprise 4.5 weight% or less of one or more of Mg, Mn, Cr and Ca.

A K value defined by [Equation 1] may satisfy 4-39 before the immersing and cooling:

$$[\text{Equation 1}] \quad K = a*(c*d/b)$$

where a is a Zn content (wt.%) of the plating bath, b is a line speed (mpm), c is an air knife (A/K) gap (mm), and d is A/K pressure (kPa).

In the heating the blank, a temperature-rising rate may be 5-12°C/s in a first temperature-rising section in which the blank temperature is less than 600°C, and a temperature-rising rate may be 1.2-3.5°C/s in a second temperature-rising section in which the blank temperature is 600°C or higher.

A time period of the first temperature-rising section may be shorter than a time period of the second temperature-rising section.

Advantageous Effects of Invention

According to an aspect of the present disclosure, by reducing suppressing of hydrogen diffusion in a plating layer during a hot-forming process and suppressing hydrogen flowing into steel, resistance to hydrogen embrittlement may be improved, and when applied to automobile parts, resistance to collision characteristics may be improved.

The various beneficial advantages and effects of present disclosure are not limited to the above-described contents, and may be more easily understood in the process of describing the specific embodiment of present disclosure.

Brief Description of Drawings

FIG. 1 is an image of a cross-section of comparative example 7 among hot-formed part samples manufactured in an embodiment of the present disclosure.
FIG. 2 is an image of a cross-section of inventive example 2 among hot-formed part samples manufactured in an embodiment of the present disclosure.

Best Mode for Invention

The terms used in this specification are intended to describe the present disclosure and are not intended to limit the present disclosure. An expression used in the singular encompasses the expression of the plural, unless it has a clearly different meaning in the context.

The term "comprising or including" used in this specification is to specify the components and may not to exclude the presence or addition of other components.

Unless otherwise indicated, the terms, including technical and scientific terms, used in this specification may mean the same as generally understood by a person of ordinary skill in the art to which the present disclosure belongs. Terms defined in the dictionary are to be interpreted to have a meaning consistent with the relevant technical literature and the present disclosure.

Hydrogen adsorbed in steel of a hot-formed part may cause serious problems in the material, such as strength, ductility, rigidity, and bendability. A hot-formed part may have a martensite phase, which may be relatively vulnerable to hydrogen-induced embrittlement. In a circumstance in which a steel material having higher strength may be used for automobile weight reduction, problems such as hydrogen delay fracture and ductility reduction due to hydrogen may become more important as strength of the hot-formed part increases.

The inventors of the present disclosure discovered that when hot-forming a plating steel material, the hydrogen adsorption circumstance may change depending on a physical phase change of the plating layer occurring during the heat treatment process, and suggested the present disclosure.

That is, when manufacturing a hot-formed part, the plating steel material may be heated for a predetermined period of time until entering a furnace at room temperature and undergoing an austenite transformation. Over time, the state of the plating layer may change from a solid phase to a liquid phase, may change to an intermetallic compound by diffusion of Fe from a parent material, and may change to the final solid phase. In the section in which the plating layer may be present in the solid phase in the initial stage of heating, the diffusion rate of hydrogen may be relatively slow in the aluminum plating layer, which may act as a physical obstacle preventing external hydrogen from entering the steel.

As the hot-forming heat treatment is performed, when the temperature of the plating layer rises to a melting point or higher, the plating layer may change to a liquid phase, and the solid-solution degree of hydrogen in the molten plating layer may vary depending on the composition of the plating layer, but may be much higher than the solid-solution degree of the solid phase. Finally, Fe of the parent material and the plating layer may form an intermetallic compound, and the plating layer may change to a solid phase. Since the solid-solution degree of hydrogen in the solid phase is low, the excessive hydrogen solid-solute in the liquid phase may diffuse to the parent material of the hot-formed part to maintain the hydrogen equilibrium state in the solid phase. It was recognized that the diffusion of hydrogen was affected by the structure, composition, or the like, of the plating layer. Based on this, the present disclosure was suggested.

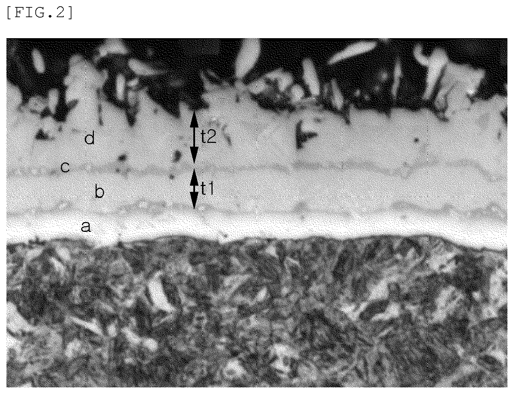

First, as an embodiment of the present disclosure, the hot-formed part may be described in detail. Referring to FIG. 2, which is a cross-sectional image of inventive example 2 among the embodiments described below, the hot-formed part may comprise a base iron and an aluminum alloy layer formed on the base iron,

The aluminum alloy layer may comprise a diffusion layer (a), a first alloy layer (b), a second alloy layer (c), and a third alloy layer (d) sequentially formed from the base iron based on the cross-section, and a thickness (t1) of the first alloy layer (b) may be 8.5 $\mu$m or less. The thickness of the aluminum alloy layer in the present disclosure may be an average of the values measured at 45 or more positions at equal intervals of 10 $\mu$m in the horizontal direction from three images obtained at 500x magnification using an optical microscope of the cross-section of the hot-formed part.

The base iron may indicate the parent material in the part obtained by hot-forming the hot-forming steel material, and may occupy most of the thickness in the cross-section of the hot-formed part. The base iron may be the parent material of the hot-formed part obtained after hot-forming the base steel sheet, which is the parent material of the hot-forming steel material. In this case, the base iron may usually have a martensite structure mainly through hot-forming and cooling.

The composition of the base iron to the base steel sheet is not particularly limited, and any composition used as a hot-formed part may be sufficient. As a preferable example, the base iron may include, weight%, C: 0.02 to 0.6%, Si: 0.001 to 2%, Al: 0.001 to 1%, Mn: 0.1 to 4%, P: 0.05% or less, S: 0.02% or less, N: 0.02% or less, Ti: 0 to 0.1%, B: 0.0001 to 0.01%, Cu: 0 to 1.00%, Mo: 0 to 1.00%, Cr: 0 to 1.00%, Ni: 0 to 1.00%, V: 0 to 1.00%, Ca: 0 to 0.01%, Nb: 0 to 0.1%, Sn: 0 to 1%, W: 0 to 1%, Sb: 0 to 1%, Mg: 0 to 0.1%, Co: 0 to 1%, As: 0 to 1%, Zr: 0 to 1%, Bi: 0 to 1%, REM: 0 to 0.3%, and a balance of Fe and inevitable impurities.

The aluminum alloy layer may indicate an alloyed plating layer formed by alloying the aluminum plating layer of the aluminum-plated steel material for hot-forming with the parent material during the hot-forming process. The aluminum plating layer may indicate a layer including a portion (within 15 weight%) of silicon (Si) to prevent excessive alloying of aluminum and Fe of the steel material with aluminum (Al) as the main component during plating. Also, other components may also be included if desired.

In the aluminum alloy layer, the diffusion layer (a) may be a ferrite layer including some Al formed by combining with Fe of the base steel sheet and some Al, which is the main component of the aluminum plating layer. In this case, the content of Al may be 3-9 weight% and a balance of Fe and inevitable impurities.

A concentrated layer in which Si is partially concentrated may be included on the diffusion layer (a). Si of the concentrated layer may be 1.5 times or more than the average of the diffusion layer (a).

The first alloy layer (b) and the third alloy layer (d) may be formed as Fe and the aluminum plating layer diffusing from the parent material as heat treatment for the hot-formed part is performed form an intermetallic compound and change into a solid phase. The first alloy layer (b) and the third Al-Fe alloy layer (d) may be an intermetallic compound of Al and Fe, and the alloy phase may be formed relatively rapidly during the heat treatment process, such that a large amount of voids may be formed between the atomic arrangements. These voids may act as passages for hydrogen diffusion, and may act as paths through which supersaturated hydrogen within the plating layer diffuses to the parent material. However, in the alloy phase included in Si, such as the second alloy layer (c), Si atoms may be preferentially located in the vacancies, and may fill the voids as hydrogen diffusion passages.

The preferable composition of the first alloy layer (b) may comprise Al: 37-52 weight%, Fe: 38-51 weight%, Si: 1.5-5 weight% and Zn: 2-20 weight%, and the preferable composition of the third alloy layer (d) may comprise Al: 35-52 weight%, Fe: 38-51 weight%, Si: 1.5-5.5 weight% and Zn: 5-26 weight%. The more preferable composition of the first alloy layer (b) may comprise Al: 37.0-52.0 weight%, Fe: 38.0-51.0 weight%, Si: 1.50-5.0 weight% and Zn: 2.0-20.0 weight%, and the more preferable composition of the third alloy layer (d) may comprise Al: 35.0-52.0 weight%, Fe: 38.0-51.0 weight%, Si: 1.50-5.50 weight% and Zn: 5.0-26.0 weight%.

The second alloy layer (c) may be present between the first alloy layer (b) and the third alloy layer (d) as described above, and may comprise a large amount of Si, which may prevent hydrogen from diffusing into the parent material. To this end, the Si content in the second alloy layer (c) may be twice or more than that in the first alloy layer (b) and the third alloy layer (d). The preferable composition of the second alloy layer (c) may comprise Al: 19-47 weight%, Fe: 45-69 weight% and Si: 7.2-15 weight%. The more preferable composition of the second alloy layer (c) may include Al: 19.0-47.0 weight%, Fe: 45.0-69.0 weight% and Si: 7.20-15.0 weight%.

From this perspective, as the second alloy layer (c) approaches to the diffusion layer (a), the probability that hydrogen included in the plating layer diffuses into the parent material may be lowered, which may be advantageous for hydrogen embrittlement. Accordingly, reduction of the gap between the diffusion layer (a) and the second alloy layer (c) may be advantageous for reducing hydrogen embrittlement, such that the thickness (t1) of the first alloy layer (b) in the present disclosure may be 8.5 $\mu$m or less.

The second alloy layer (c) may include a region (discontinuous region) not continuous in the length direction on the cross-section of aluminum alloy layer. However, when a sufficient surface is formed in a three-dimensional aspect, the effect of reducing hydrogen embrittlement may be sufficiently exerted from a macroscopic perspective. When the second alloy layer (c) is too discontinuous, the role as a hydrogen diffusion barrier may be reduced. However, when observed with an optical microscope at a magnification of 200x or less, a continuous band shape of 5 $\mu$m or more may be present in the horizontal direction, and preferably, a continuous region of 10 $\mu$m or more may be present. It may be preferable to maintain the entire length disconnected in the cross-section at 40% or less in the horizontal direction.

The absolute amount of hydrogen flowing into the aluminum plating layer during the process of manufacturing the hot-formed part may also be important. Accordingly, when elements such as zinc and magnesium are included in the aluminum plating layer for manufacturing the hot-formed part, there may be effect that hydrogen flowing into the plating layer during the process of manufacturing the hot-formed part may be reduced.

The aluminum plating layer including zinc or magnesium may have a low solid-solution of hydrogen in a molten state, and may be dissociated at the surface, such that the absolute amount of hydrogen entering the plating layer may be small, and moisture in the air at the surface layer may preferentially form zinc or magnesium oxide, thereby hindering the surface adsorption of the plating layer and moisture, and inhibiting entering of hydrogen.

However, when the content of zinc included in the plating layer increases, liquid metal embrittlement (LME) caused by zinc may occur, which may cause cracks in the base iron. Also, when the magnesium content increases, adhesion may increase due to the excessively formed magnesium oxide, and the plating layer may be attached to the mold and may fall off. In this process, a defect may occur in the hot-formed part. Also, spatter may occur due to magnesium during welding, which may deteriorate weldability.

Zinc included in the plating layer may begin to decrease in proportion as the Fe alloying of the base iron continues in the molten state and the plating layer increases. The zinc content in the hot-formed part may be 5-35 weight%. The zinc may be mainly distributed in the first alloy layer (b) and the third alloy layer. Depending on embodiments, the Zn content included in the first alloy layer (b) may be less than the Zn content included in the third alloy layer (d) on average.

Magnesium may have a high oxidizing property and may tend to move to the surface during the heat treatment process. Accordingly, a relatively large amount may be present in the third alloy layer (d) than in the first alloy layer (b), and the remainder may be present as Mg oxide on the surface. The content of magnesium may need to be managed to 5 weight% or less in the formed part to prevent weldability and adhesion. According to an embodiment, the content may be managed to an average of 3 weight% or less when observed with a scanning electron microscope at the center of the third alloy layer (d).

According to an embodiment, the thickness of the aluminum alloy layer of the hot-formed part may be effectively 30 $\mu$m or less, other than the diffusion layer (a). The diffusion layer may vary depending on the heat treatment time period for manufacturing the hot-formed part. When the other layer has a great thickness after the heat treatment, other than the diffusion layer, the effect of hydrogen release, naturally escaping after manufacturing the hot-formed part, may be reduced. As the thickness of the alloy layer increases, the absolute amount of hydrogen included in the alloy layer may increase, which may deteriorate the hydrogen embrittlement resistance.

According to an embodiment, the thickness (t1) of the first alloy layer (b) may be smaller than the thickness (t2) of the third alloy layer (d).

The third alloy layer (d) may be relatively far from the parent material, differently from the first alloy layer (b) which is close to the parent material, such that the amount of Fe diffusing may be locally uneven. The liquid plating layer may change to a solid phase by reaction with Fe and shrinks. This uneven diffusion of Fe may cause irregular shrinkage of the solid phase and may form voids in the middle of the alloy phase. These voids may generally act as hydrogen traps, but when many such voids are present, hydrogen present in the plating layer may gather in the voids and may reduce the probability of diffusion to the parent material.

While the second alloy layer (c) acts as a hydrogen diffusion barrier, the voids present in the third alloy layer (d) may have the advantage of positioning the amount of hydrogen in the plating layer far from the parent material, thereby reducing the amount of hydrogen in the parent material.

According to an embodiment, the number of voids having a major axis of 500 nm or more, included in the first alloy layer (b), may be less than the number of voids having a major axis of 500 nm or more, included in the third alloy layer (d). Meanwhile, the major axis of the voids having a major axis of 500 nm or more, included in the first alloy layer (b), may be smaller than the major axis of the voids having a major axis of 500 nm or more, included in the third alloy layer (d).

The amount of diffusible hydrogen included in the base iron of the hot-formed part may have the highest hydrogen content immediately after the initially formed part is formed, and the content may naturally decrease as diffusible hydrogen is released to the outside through the entire cross-section of the part or the plating layer over time. In order to prevent hydrogen embrittlement, which is a phenomenon in which the formed part is destroyed by internal stress before an external impact is applied after the formed part is manufactured, it may be preferable to measure within one week after the formed part is manufactured, which may be 0.1 weight ppm or less. This measurement may be obtained by measuring a sample of the hot-formed part manufactured in a furnace without a separate dew point control device.

Thereafter, as another embodiment of the present disclosure, a method for manufacturing the hot-formed part may be described in detail.

The manufacturing method may include providing an aluminum-plated steel sheet including a base steel sheet and an aluminum plating layer formed on a surface of the base steel sheet; manufacturing a blank using the aluminum-plated steel sheet, and heating the blank; and forming and cooling the heated blank.

In the present disclosure, the base steel sheet may not be specifically limited, and when the steel sheet may be used in the technical field to which the present disclosure belongs, the type, composition, or the like, thereof are not specifically limited.

The method of forming the aluminum plating layer is not specifically limited by the method, and hot-dip plating or electroplating may be used.

For example, a cold-rolled steel sheet for a hot-formed part may be annealed and immersed in a molten plating bath, and the plating amount may be adjusted, and the steel sheet may be cooled, thereby manufacturing a plated steel sheet. Specifically, the aluminum plating layer may be immersed in a plating bath including Al as the main component, and the composition of the plating bath may include Zn 10-35 weight% and Si 15 weight% or less, and the remainder may include Al and inevitable impurities.

Preferably, Zn 15-30 weight% and Si 12 weight% or less, and the remainder of Al and inevitable impurities may be included. More preferably, Zn 20-28% weight%, Si 9 weight% or less, and the remainder of Al and inevitable impurities may be included.

Also, Fe of 4 weight% or less may be included. Also, one or more of Mg, Mn, Cr and Ca may be included by 4.5 weight% or less to improve corrosion resistance.

Among the plating bath components, Si may prevent the formation of an Al-Fe alloy layer by combining with aluminum and base steel sheet Fe, and may prevent erosion of the plating equipment immersed in the plating bath. However, when the content exceeds 15 weight%, the growth of the Al-Fe alloy layer may be excessively suppressed and weld liquefaction embrittlement may occur.

Zn may be included at 10 weight% or more to control the position of the second alloy layer by suppressing the diffusion of Si into the surface layer according to the growth of the solid phase during heat treatment to manufacture a hot-formed part, and also, to ensure the corrosion resistance of the hot-formed part. However, when the content exceeds 35 weight%, the melting point of the plating layer may decrease and fluidity may increase, such that it may be highly likely that liquid embrittlement may occur. The content may be preferably 15-30 weight%.

Fe in the plating bath may be dissolved from the base steel sheet over time during the continuous plating process and may be present cumulatively, such that it may be necessary to manage the content to 4 weight% or less to prevent dross defects.

The plating amount may be adjusted through an air knife (A/K), and the gas used in this case may be basically air, but when a defect occurs due to surface oxidation of the plating layer, nitrogen or some nitrogen may be included and used. The plating amount may be effectively determined to $10g/m^2$ or more and $90g/m^2$ or less on a single side basis. When the plating amount is too small, there may be a problem in corrosion resistance and the surface quality may deteriorate, and when the plating amount is excessive, the external release of hydrogen absorbed in the plating layer may be prevented during hot-forming, adhesion to the mold may occur, such that productivity may deteriorate, and part defects may be caused.

In order to control the plating amount, the gas pressure of the air knife and the gap between the material and the air knife may need to be controlled. The adhesion amount control may be a process in which the extra plating layer is removed by the shear stress of the gas coming out of the air knife. Even when the same shear stress is applied to the plating layer, the plating adhesion amount, surface condition, and plating layer structure may change depending on the line speed (mpm), which is the speed at which the steel sheet passes through the air knife, and viscosity of the plating bath. For example, when the chemical composition of the plating bath includes aluminum, zinc, silicon, and magnesium, these elements entering the plating bath may affect viscosity of the liquid plating bath. The Fe and Al components of the material may react faster than the other components of the plating bath and may form an Fe-Al alloy phase of 10 $\mu$m or less. This alloy phase may include a large amount of unevenness on the surface, such that the liquid plating layer attached to the upper part may not be evenly cut by the air knife, such that surface appearance may degrade. This uneven amount of plating adhesion may become a factor hindering the formation of a continuous phase of the second alloy layer (c), which is a diffusion barrier during heat treatment for the heat treated formed part. Thus, K, defined by [Equation 1] below, may be in the range of 4-39 before the immersing and cooling.

$$[Equation\ 1]\ K = a*(c*d/b)$$

Herein, a is a Zn content (wt.%) of the plating bath, b is a line speed (mpm), c is an air knife (A/K) gap (mm), and d is A/K pressure (kPa).

After adjusting the plating amount, when cooling, the steel sheet may be cooled to the solidification point at an average rate of 20°C/s or more, and may be cooled from the solidification point to 350°C at an average rate of less than 20°C/s.

Even immediately after passing through the air knife, the plating layer may be in a liquid state at the melting point or higher, and the strip temperature may be similar to that of the plating bath, such that the Al-Fe alloy layer may continue to grow between the plating layer and the base steel sheet. Excessive growth of the Al-Fe alloy layer may increase brittleness of the plating layer, which may cause plating peeling during coiling or blank shearing. To prevent this, it may be preferable to cool at a rate of 20°C/s or more until reaching the solidification point, and after the solidification point, it may be preferable to cool at a rate of less than 20°C/s to suppress vibration and bending of the strip caused by air generated from the cooling tower, and to suppress deviation in the plating adhesion amount caused by this.

The aluminum-plated steel sheet provided as above may be processed and manufactured into a blank shape close to the shape of the part for forming.

The blank may be heated for hot-forming. The heating may be performed at a temperature of Ac3°C or more, 970°C or less, preferably 850°C-950°C. For example, the aluminum-plated steel sheet may be placed in a heat treatment furnace determined to the above-mentioned temperature and may be heated for 180-600 seconds such that the steel structure may be completely transformed into austenite. When the temperature is too low, it may be difficult for the steel material to be completely transformed into an austenite single phase, and when the temperature is excessively high, the surface may be oxidized or the hydrogen content in the steel may increase, and in the case of the plating layer, volatilization in the liquid phase may be severe, such that the plating layer may not remain sufficiently, sch that corrosion resistance deteriorate may occur.

For example, when heating the blank, in the first temperature-rising section in which the blank temperature is less than 600°C, the temperature-rising rate may be heated at 5-12°C/s, and in the second temperature-rising section at 600°C or more, the temperature-rising rate may be heated at 1.2-3.5°C/s. In this case, the time period of the first temperature-rising section may be shorter than the time period of the second temperature-rising section.

The atmosphere of the furnace may be usually an atmospheric atmosphere, but the moisture concentration in the air may be controlled in order to actively reduce the hydrogen embrittlement of the part. The moisture concentration may be measured through the dew point and may be performed in an atmosphere with a dew point of -25°C-15°C.

There may be no specific limitations in the heating method, and a radiant tube may be used, or a radiation heating method may be used, and induction heating and electric heating may be used. The heating rate during heating may be controlled depending on the plate thickness and type of plating layer.

The aluminum-plated steel sheet transformed into an austenite single phase by the furnace may be transferred from the furnace and may be placed in the mold, and may be processed and cooled simultaneously by the mold. It may be preferable that the time taken to move from the furnace to the mold is within 15 seconds. When it is later than this, the material may be naturally cooled before cooling in the mold, such that ferrite may be formed, and the material may be deteriorated.

The critical cooling rate for obtaining martensite transformation in the mold may vary depending on the steel component, but considering that cooling generally occurs until the steel sheet is transferred from the furnace to the mold, an average cooling rate from the initial temperature of the material placed in the mold, 700°C, to 350°C, may be a cooling rate of 20°C/s-50°C/s effectively.

Mode for Invention

Hereinafter, preferable embodiments of the present disclosure may be described with reference to the accompanied drawings. However, the embodiment of the present disclosure may be modified with various other forms, and the scope of the present disclosure is not limited to the embodiment described below. The embodiments below are intended to help understand the present disclosure, and the scope of rights in the present disclosure should not be limited to the following embodiment, and may be determined not only by the claims described below but also by equivalents thereof.

(Embodiment)

A cold-rolled steel sheet having the composition (a balance of Fe and inevitable impurities) listed in Table 1 below was prepared, and in an annealing furnace including 5% hydrogen in a nitrogen atmosphere, the temperature was raised from room temperature to 780°C for plating, and the steel sheet was maintained at the annealing temperature of 780°C for 80 seconds. The base steel sheet was cooled to a temperature 10°C higher than the temperature of the molten plating bath, and immersed in the plating bath and aluminum alloy plating was performed.

The plating bath composition (weight%) may be as below.

Plating bath 1: Si 9%, Fe 2%, a balance of Al and inevitable impurities
Plating bath 2: Si 8%, Zn 27%, Fe 1.5%, and a balance of Al and inevitable impurities
Plating bath 3: Si 6%, Zn 25%, Mg 1%, and a balance of Al and inevitable impurities
Plating bath 4: Si 6%, Zn 25%, Mg 5%, and a balance of Al and inevitable impurities
Plating bath 5; Si 6%, Zn 38%, Mg 5%, and a balance of Al and inevitable impurities

Comparative examples 1 to 7 were manufactured using the plating bath 1, inventive examples 1 to 4 were manufactured using the plating bath 2, inventive example 5 was manufactured using the plating bath 3, comparative example 8 was manufactured using the plating bath 4, and comparative example 9 was manufactured using the plating bath 5.

The plating amount was adjusted using an air knife (Air Knife) after the plating. In this case, the plating amount is listed in Table 2 below. After adjusting the plating amount, the plating was cooled at a cooling rate of 20°C/s until the solidification point, cooled at a cooling rate of 10°C/s from the solidification point to 350°C, and naturally cooled, thereby manufacturing the plated steel sheet.

[Table 1]

| Classification | C | Si | Mn | P | Al | Cr | B | Ti | N |
|---|---|---|---|---|---|---|---|---|---|
| Content (weight%) | 0.21 | 0.21 | 1.1 | 0.01 | 0.03 | 0.2 | 0.0027 | 0.030 | 0.004 |

The plated steel sheet was sheared into a 400*380 mm blank, and the blank was placed in an air-atmosphere box furnace with an ambient temperature of 900°C and heat treatment was performed.

The heat treatment was largely divided into two stages by temperature section, and each temperature-rising rate was adjusted. The first temperature-rising section was from room temperature to 600°C before the surface of the plating layer liquefies, and in this case, the average temperature-rising rate was maintained at 6-12°C/s. The second temperature-rising section was from 600°C to 900°C, in which the liquefied plating layer was alloyed with Fe of the base iron again and became a solid phase, and the temperature-rising rate was maintained at 1.2-3.5°C/s. Thereafter, the temperature deviation of the blank by position was not allowed to exceed 10°C after reaching the target heat treatment temperature. In this case, the time period of the first temperature-rising section was maintained to be shorter than that of the second temperature-rising section, thereby reducing the destruction of the layered structure due to rapid alloying.

The total heat treatment time was the time from the time from when the steel sheet was placed in a box furnace at room temperature to when finally taken out of the box furnace. Hot press forming was performed using a water-cooled mold, thereby obtaining a hot-formed part at a cooling rate of 20°C/s.

Thereafter, the cross-section of the hot-formed parts obtained from each sample was observed using a scanning electron microscope (SEM) and the structure within the alloy layer was analyzed. Also, the mold adhesion, base iron cracks, spot weldability, and the amount of diffusible hydrogen in the part of each sample were measured, and the results are listed in Table 2 below.

Specifically, the cross-section of each phase was distinguished using a magnification of X500 times, and as for the component analysis, a central point of each image was measured three times at different positions using energy dispersive X-ray spectroscopy (EDS) at a magnification of X2000 using a scanning electron microscope (SEM), and the average value of the three points was used. The center point of each phase was measured three times at different positions, and the average of the three points was used. The thicknesses $t1$ and $t2$ of the first alloy layer (b) and third alloy layer (d) were the averages of the values measured at 45 or more points with 10 $\mu$m equal intervals in the horizontal direction from three images obtained using an optical microscope at a magnification of 500 times. In this case, the portion in which the c layer was not continuous and was disconnected, a line segment was virtually drawn from the disconnected portion to the next c layer, and the distance from the layer was measured based on this line segment.

Mold adhesion was determined by visually checking the mold surface with the naked eye after manufacturing the part and blowing with air. When unevenness occurred felt by hand, the foreign matter was removed, and the same material was used to manufacture the part again. When the plating layer fallen off the part was stuck to the mold again, the sample was determined as defective adhesion.

To observe base iron cracks, a hot-formed part was manufactured using an omega ($\Omega$)-shaped mold. Base iron cracks were observed by dividing into LME and microcracks. LME is liquid metal embrittlement, which occurs due to liquid molten metal, and may be observed to a depth of several hundred micrometers in the base iron, and may occur in large quantities in the area in which the most tension is applied at a high temperature of a melting point or higher of the plating layer. Microcracks may occur due to weakening of the grain boundary of the base iron by the solid phase diffusion of the plating layer, and may occur in the area in which the friction between the mold and the material is the most severe, and the depth thereof may be several tens of micrometers. To observe these two, a formed part was manufactured using a mold protruding upwardly from the center with a height of 10 cm, and the cross-section was cut with a laser. In each experiment, a sample was manufactured at the same position of the part, and cracks in the same base iron were observed for each experiment through a cross-section of the part at 200x magnification using an optical microscope. Three or more positions were observed in each area, and when a base iron crack was observed in one or more positions, the sample was determined as defective.

The amount of diffusible hydrogen was evaluated by quantifying the amount of hydrogen released while heating the sample from room temperature to 400°C using Bruker's G8 GALILEO product. Since the hydrogen included in the part is naturally released to the outside over time, the measurement was performed using a sample having passed the same amount of time after the part was manufactured. As the amount of diffusible hydrogen included in the steel material increases, hydrogen may be concentrated around the disposition or defect in the steel, and sudden breakage of the material may occur due to internal stress or external force. It was found that, in a general HPF material, when the amount of diffusible hydrogen is 0.1 ppm or more, part breakage occurred, such that samples with a hydrogen amount of 0.1 ppm or more or more were determined to have a risk of hydrogen embrittlement.

As for weldability evaluation method, the standard of ISO18278 was used. The electrode was 6 mm, the pressure was 4 kN, and the welding time was 320 ms. The current reaching the specified button size was measured, and the current was increased by 0.5 kA or more from the current and welding was performed 5 times. When 2 or more spatters were observed, the sample was evaluated as defective. In this case, as for spatters, both those occurring on the surface of the part and those occurring between the samples after separating the welded samples were evaluated. Regardless of the current range, when the minimum button size specified in the standard was not ensured, the sample was determined as defective.

[Table 2]

| Classification | Heat treatment conditions (°C, mins) | Single-side d plating adhesion (g/m²) | b layer composition (weight%) | | | c layer composition (weight%) | | | d layer composition (weight%) | | | |
|---|---|---|---|---|---|---|---|---|---|---|---|---|
| | | | Si | Fe | Zn | Si | Fe | Zn | Si | Fe | Zn | Mg |
| Comparative example 1 | 870, 5 | 50 | 2.8 | 47.4 | 0.0 | 11.4 | 60.1 | 0.0 | 2.6 | 45.7 | 0.0 | 0.0 |
| Comparative example 2 | 900, 3 | 50 | 2.9 | 46.7 | 0.0 | 9.3 | 57.1 | 0.0 | 2.8 | 42.5 | 0.0 | 0.0 |
| Comparative example 3 | 900, 5 | 50 | 3.1 | 48.5 | 0.0 | 11.4 | 65.3 | 0.0 | 3.1 | 48.9 | 0.0 | 0.0 |
| Comparative example 4 | 900, 8 | 50 | 4.5 | 48.3 | 0.0 | 13.0 | 54.5 | 0.0 | 3.9 | 49.7 | 0.0 | 0.0 |
| Comparative example 5 | 900, 5 | 40 | 2.4 | 49.1 | 0.0 | 9.7 | 67.7 | 0.0 | 3.0 | 49.6 | 0.0 | 0.0 |
| Comparative example 6 | 900, 5 | 50 | 2.4 | 48.0 | 0.0 | 10.4 | 60.1 | 0.0 | 2.7 | 47.5 | 0.0 | 0.0 |
| Comparative example 7 | 900, 5 | 80 | 4.2 | 47.9 | 0.0 | 12.0 | 55.4 | 0.0 | 4.0 | 44.6 | 0.0 | 0.0 |
| Inventive example 1 | 900, 3 | 50 | 2.0 | 47.3 | 7.3 | 12.1 | 51.5 | 0.0 | 4.8 | 40.2 | 5.9 | 0.0 |
| Inventive example 2 | 900, 5 | 50 | 2.3 | 44.1 | 12.5 | 9.7 | 53.6 | 4.8 | 2.8 | 44.3 | 12.6 | 0.0 |
| Inventive example 3 | 900, 5 | 80 | 3.1 | 45.5 | 11.8 | 12.9 | 53.1 | 0.2 | 3.3 | 40.3 | 15.4 | 0.0 |
| Inventive example 4 | 900, 8 | 50 | 1.3 | 44.5 | 12.7 | 9.4 | 66.3 | 0.1 | 1.9 | 45.4 | 13.5 | 0.0 |
| Inventive example 5 | 900, 5 | 50 | 2.9 | 45.2 | 12.5 | 13.3 | 55.4 | 0.1 | 4.3 | 43.9 | 16.4 | 0.6 |
| Comparative example 8 | 900, 5 | 50 | 2.2 | 46.8 | 11.1 | 14.1 | 50.3 | 0.1 | 4.3 | 44.6 | 18.5 | 1.3 |
| Comparative example 9 | 900, 5 | 50 | 2.5 | 40.3 | 23.0 | 12.3 | 53.1 | 0.7 | 3.8 | 42.6 | 27.3 | 1.2 |

[Table 3]

| Classifi cation | t1 (μm) | Mold adhesion | Base iron cracks | Spot weldability (number of spatters) | Amount of diffusible hydrogen (weight ppm) |
|---|---|---|---|---|---|
| Comparat ive example 1 | 10.9 | Good | Not occurred | 0 | 0.216 |
| Comparat ive example 2 | 10.3 | Good | Not occurred | 0 | 0.209 |
| Comparat ive example 3 | 11.6 | Good | Not occurred | 0 | 0.218 |
| Comparat ive example 4 | 9.6 | Good | Not occurred | 1 | 0.177 |
| Comparat ive example 5 | 14.7 | Good | Not occurred | 0 | 0.163 |
| Comparat ive example 6 | 10.3 | Good | Not occurred | 0 | 0.167 |
| Comparat ive example 7 | 11.8 | Good | Not occurred | 0 | 0.196 |
| Inventiv e example 1 | 4.1 | Good | Not occurred | 0 | 0.039 |
| Inventiv e example 2 | 5.3 | Good | Not occurred | 0 | 0.054 |
| Inventiv e example 3 | 7.7 | Good | Not occurred | 0 | 0.090 |
| Inventiv e example 4 | 6.5 | Good | Not occurred | 0 | 0.089 |
| Inventiv e example 5 | 5.3 | Good | Not occurred | 0 | 0.072 |
| Comparat ive example 8 | 8.6 | Defective | Not occurred | 2 | 0.109 |
| Comparat ive example 9 | 8.9 | Defective | Occurred | 5 | 0.113 |

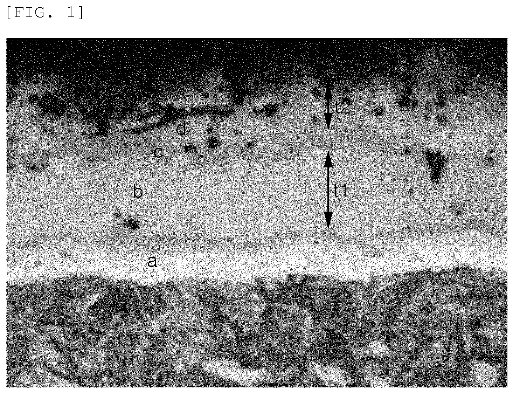

FIG. 1 is a cross-section of comparative example 7, and FIG. 2 may be an image obtained by observing the cross-section of inventive example 2.

As indicated in the results in Tables 2 and 3, in the inventive example satisfying the conditions of the present disclosure, excellent spot weldability and hydrogen embrittlement resistance were ensured, but in the comparative examples hydrogen embrittlement resistance, and in some cases, spot weldability was deteriorated. Referring to FIG. 2, in inventive example 2, t2 was greater than t1.

In comparative examples 1 to 7, the thickness (t1) of the first alloy layer (b) in the aluminum alloy layer of the manufactured hot-formed part was excessive, such that it may be difficult to ensure hydrogen embrittlement resistance. In particular, referring to FIG. 1, t1 was greater than t2.

In comparative Example 8, as the content of Mg becomes excessive, magnesium in the plating layer was present more in the form of magnesium oxide on the surface of the plating layer than in the plating layer during the heat treatment process for manufacturing the formed part, and the magnesium oxide having strong adhesiveness caused a sticking phenomenon, that is, strongly sticking to the mold. This may cause the mold to be cleaned every time the steel sheet is produced, which may deteriorate productivity. Also, weldability may be deteriorated due to the influence of these oxides.

In comparative example 9, as the content of Zn and Mg was excessive during plating, base iron cracks such as liquefaction brittle fracture and micro cracks in the manufactured hot-formed part were severe, and weldability was also deteriorated due to various oxides.

Claims

1.   A hot-formed part, comprising:

base iron and an aluminum alloy layer formed on the base iron,
wherein the aluminum alloy layer comprises a diffusion layer (a), a first alloy layer (b), a second alloy layer (c), and a third alloy layer (d) sequentially formed from the base iron based on a cross-section,
wherein a thickness (t1) of the first alloy layer (b) is 8.5 μm or less, and
wherein a thickness (t1) is an average of values measured at 45 points or more at equal intervals of 10 μm in a horizontal direction from three images obtained using an optical microscope at 500x magnification.

2.   The hot-formed part of claim 1,

wherein the first alloy layer (b) comprises Al: 37-52 weight%, Fe: 38-51 weight%, Si: 1.5-5 weight% and Zn: 2-20 weight%,
wherein the second alloy layer (c) comprises Al: 19-47 weight%, Fe: 45-69 weight% and Si: 7.2-15 weight%, and
wherein the third alloy layer (d) comprises Al: 35-52 weight%, Fe: 38-51 weight%, Si: 1.5-5.5 weight% and Zn 5-26 weight%.

3. The hot-formed part of claim 1, wherein a total thickness of the first alloy layer (b), the second alloy layer (c) and the third alloy layer (d) is 30 μm or less.

4. The hot-formed part of claim 1, wherein the thickness (t1) of the first alloy layer (b) is smaller than a thickness (t2) of the third alloy layer.

5. The hot-formed part of claim 1, wherein the second alloy layer (c) comprises a discontinuous region in a length direction of the cross-section.

6. The hot-formed part of claim 1, wherein the second alloy layer (c) comprises a continuous region of 5 μm or more in a length direction of the cross-section.

7. The hot-formed part of claim 1, wherein a Zn content of the first alloy layer (b) is less than a Zn content of the third alloy layer (d).

8. The hot-formed part of claim 1, wherein a Si content of the second alloy layer (c) is twice or more than a Si content of the first alloy layer (b) or the third alloy layer (d).

9. The hot-formed part of claim 1, wherein the number of voids having a major axis of 500 nm or more, included in the first alloy layer (b), is less than the number of voids having a major axis of 500 nm or more, included in the third alloy layer (d).

10. The hot-formed part of claim 1, wherein a major axis of void having a major axis of 500 nm or more, included in the first alloy layer (b), is smaller than a major axis of void having a major axis of 500 nm or more, included in the third alloy layer (d).

11. The hot-formed part of claim 1, further comprising:
Mg oxide formed on the third alloy layer (d).

12. The hot-formed part of claim 1, wherein a Si concentrated layer in which a composition of Si is 1.5 times or more concentrated than an average of the diffusion layer (a) is further comprised on the diffusion layer (a).

13. The hot-formed part of claim 1, wherein the amount of diffusible hydrogen in the base iron is 0.1 weight ppm or less.

14. The hot-formed part of claim 1, wherein the base iron comprises, by weight%, C: 0.02 to 0.6%, Si: 0.001 to 2%, Al: 0.001 to 1%, Mn: 0.1 to 4%, P: 0.05% or less, S: 0.02% or less, N: 0.02% or less, Ti: 0 to 0.1%, B: 0.0001 to 0.01%, Cu: 0 to 1.00%, Mo: 0 to 1.00%, Cr: 0 to 1.00%, Ni: 0 to 1.00%, V: 0 to 1.00%, Ca: 0 to 0.01%, Nb: 0 to 0.1%, Sn: 0 to 1%, W: 0 to 1%, Sb: 0 to 1%, Mg: 0 to 0.1%, Co: 0 to 1%, As: 0 to 1%, Zr: 0 to 1%, Bi: 0 to 1%, REM: 0 to 0.3%, and a balance of Fe and inevitable impurities.

15. A method for manufacturing a hot-formed part, the method comprising:

providing an aluminum-plated steel sheet comprising a base steel sheet and an aluminum plating layer formed on a surface of the base steel sheet;
manufacturing a blank using the aluminum-plated steel sheet, and heating the blank; and
forming and cooling the heated blank,
wherein the providing the aluminum-plated steel sheet comprises:

forming the aluminum plating layer by immersing the base steel sheet in a plating bath comprising 10-35 weight% of Zn, 15 weight% or less of Si, and a remainder Al and inevitable impurities;
cooling the aluminum plating layer to a solidification point at an average rate of 20°C/s or more; and
cooling from the solidification point to 350°C at an average rate of less than 20°C/s.

16. The method of claim 15, wherein the plating bath comprises 4 weight% or less of Fe.

17. The method of claim 15 and 16, wherein the plating bath comprises 4.5 weight% or less of one or more of Mg, Mn, Cr and Ca.

18. The method of claim 15, wherein a K value defined by [Equation 1] satisfies 4-39 before the immersing and cooling:

$$[Equation\ 1]\ K = a*(c*d/b)$$

where a is a Zn content (wt.%) of the plating bath, b is a line speed (mpm), c is an air knife (A/K) gap (mm), and d is A/K pressure (kPa).

19. The method of claim 15, wherein, in the heating the blank, a temperature-rising rate is 5-12°C/s in a first temperature-rising section in which the blank temperature is less than 600°C, and a temperature-rising rate is 1.2-3.5°C/s in a second temperature-rising section in which the blank temperature is 600°C or higher.

20. The method of claim 19, wherein a time period of the first temperature-rising section is shorter than a time period of the second temperature-rising section.

[FIG. 1]

[FIG.2]

## INTERNATIONAL SEARCH REPORT

| International application No. |
|---|
| **PCT/KR2023/020815** |

### A. CLASSIFICATION OF SUBJECT MATTER

**C23C 2/12**(2006.01)i; **C23C 2/28**(2006.01)i; **C23C 2/40**(2006.01)i; **C22C 21/10**(2006.01)i; **C22C 38/02**(2006.01)i; **C22C 38/06**(2006.01)i; **C21D 8/02**(2006.01)i

According to International Patent Classification (IPC) or to both national classification and IPC

### B. FIELDS SEARCHED

Minimum documentation searched (classification system followed by classification symbols)

C23C 2/12(2006.01); B21D 22/00(2006.01); B21D 35/00(2006.01); C22C 38/00(2006.01); C22C 38/18(2006.01); C22C 38/28(2006.01); C22C 38/38(2006.01); C23C 2/26(2006.01); C23C 2/28(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 알루미늄계 합금 도금강판(aluminum-based alloy plated steel sheet), 합금층(alloy-plated layer), 소지강판(base steel sheet), 승온(heating), 냉각(cooling)

### C. DOCUMENTS CONSIDERED TO BE RELEVANT

| Category* | Citation of document, with indication, where appropriate, of the relevant passages | Relevant to claim No. |
|---|---|---|
| X | KR 10-2019-0078013 A (POSCO) 04 July 2019 (2019-07-04)<br>See paragraphs [0050], [0052], [0110], [0147], [0161]-[0165] and [0177], claims 5-7 and 11-12, tables 5-6 and figure 4. | 1-3,5-6,8,11,13-14 |
| Y | | 4,7,9-10,12,15-20 |
| Y | KR 10-2021-0079987 A (POSCO) 30 June 2021 (2021-06-30)<br>See paragraphs [0133] and [0157]. | 4,7 |
| Y | KR 10-2378275 B1 (POSCO) 24 March 2022 (2022-03-24)<br>See paragraph [0042] and figures 1-2. | 9-10 |
| Y | KR 10-1569509 B1 (POSCO) 17 November 2015 (2015-11-17)<br>See claims 5 and 10 and figure 1. | 12,15-20 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 March 2024** | **28 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/020815** |

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2018-0074449 A (POSCO) 03 July 2018 (2018-07-03)<br>See claims 12-13. | 19-20 |

Form PCT/ISA/210 (second sheet) (July 2022)

EP 4 640 912 A1

### INTERNATIONAL SEARCH REPORT
#### Information on patent family members

| International application No. |
|---|
| **PCT/KR2023/020815** |

| Patent document cited in search report | | | Publication date (day/month/year) | Patent family member(s) | | | Publication date (day/month/year) |
|---|---|---|---|---|---|---|---|
| KR | 10-2019-0078013 | A | 04 July 2019 | KR | 10-2010084 | B1 | 12 August 2019 |
| KR | 10-2021-0079987 | A | 30 June 2021 | CN | 114761603 | A | 15 July 2022 |
| | | | | EP | 4079927 | A2 | 26 October 2022 |
| | | | | JP | 2023-507638 | A | 24 February 2023 |
| | | | | JP | 7393553 | B2 | 06 December 2023 |
| | | | | KR | 10-2307954 | B1 | 30 September 2021 |
| | | | | MX | 2022007617 | A | 12 September 2022 |
| | | | | US | 2023-0026159 | A1 | 26 January 2023 |
| | | | | WO | 2021-125901 | A2 | 24 June 2021 |
| | | | | WO | 2021-125901 | A3 | 12 August 2021 |
| KR | 10-2378275 | B1 | 24 March 2022 | CN | 113166910 | A | 23 July 2021 |
| | | | | CN | 113166910 | B | 15 August 2023 |
| | | | | CN | 116926544 | A | 24 October 2023 |
| | | | | EP | 3889311 | A1 | 06 October 2021 |
| | | | | EP | 3889311 | B1 | 01 November 2023 |
| | | | | EP | 4234732 | A2 | 30 August 2023 |
| | | | | EP | 4234732 | A3 | 06 September 2023 |
| | | | | JP | 2022-513651 | A | 09 February 2022 |
| | | | | JP | 2024-010039 | A | 23 January 2024 |
| | | | | JP | 7402232 | B2 | 20 December 2023 |
| | | | | KR | 10-2020-0066087 | A | 09 June 2020 |
| | | | | KR | 10-2021-0028627 | A | 12 March 2021 |
| | | | | KR | 10-2227111 | B1 | 12 March 2021 |
| | | | | MX | 2021005583 | A | 30 June 2021 |
| | | | | US | 11578397 | B2 | 14 February 2023 |
| | | | | US | 2021-0395872 | A1 | 23 December 2021 |
| | | | | US | 2023-0167531 | A1 | 01 June 2023 |
| | | | | US | 2023-0227956 | A1 | 20 July 2023 |
| | | | | WO | 2020-111648 | A1 | 04 June 2020 |
| KR | 10-1569509 | B1 | 17 November 2015 | CN | 106164317 | A | 23 November 2016 |
| | | | | CN | 106164317 | B | 07 August 2018 |
| | | | | CN | 108893694 | A | 27 November 2018 |
| | | | | EP | 3239336 | A1 | 01 November 2017 |
| | | | | EP | 3239336 | B1 | 17 March 2021 |
| | | | | ES | 2875073 | T3 | 08 November 2021 |
| | | | | JP | 2017-535666 | A | 30 November 2017 |
| | | | | JP | 6437635 | B2 | 12 December 2018 |
| | | | | MX | 2017003310 | A | 23 June 2017 |
| | | | | US | 10808292 | B2 | 20 October 2020 |
| | | | | US | 2016-0362764 | A1 | 15 December 2016 |
| | | | | US | 2018-0223387 | A1 | 09 August 2018 |
| | | | | US | 9963758 | B2 | 08 May 2018 |
| | | | | WO | 2016-104879 | A1 | 30 June 2016 |
| | | | | WO | 2016-104879 | A8 | 29 September 2016 |
| KR | 10-2018-0074449 | A | 03 July 2018 | CN | 110114492 | A | 09 August 2019 |
| | | | | CN | 110114492 | B | 15 April 2022 |
| | | | | EP | 3561116 | A1 | 30 October 2019 |
| | | | | JP | 2020-509200 | A | 26 March 2020 |
| | | | | JP | 6844002 | B2 | 17 March 2021 |
| | | | | KR | 10-2297297 | B1 | 03 September 2021 |

Form PCT/ISA/210 (patent family annex) (July 2022)

**INTERNATIONAL SEARCH REPORT**
Information on patent family members

International application No.

**PCT/KR2023/020815**

| Patent document cited in search report | Publication date (day/month/year) | Patent family member(s) | | Publication date (day/month/year) |
|---|---|---|---|---|
| | | US | 11167527 B2 | 09 November 2021 |
| | | US | 11654654 B2 | 23 May 2023 |
| | | US | 2020-0086608 A1 | 19 March 2020 |
| | | US | 2022-0016870 A1 | 20 January 2022 |
| | | US | 2023-0211581 A1 | 06 July 2023 |
| | | WO | 2018-117716 A1 | 28 June 2018 |

Form PCT/ISA/210 (patent family annex) (July 2022)

**REFERENCES CITED IN THE DESCRIPTION**

**Patent documents cited in the description**

- US 6296805 B
- JP 3845271 B
- JP 2003147499 A
- JP 2006051543 A